# EUROPÄISCHE PATENTSCHRIFT

(11) **EP 3 890 435 B1**
(45) Veröffentlichungstag und Bekanntmachung des Hinweises auf die Patenterteilung: **21.12.2022**
(21) Anmeldenummer: 20167888.5
(22) Anmeldetag: 03.04.2020
(51) Int. Cl.: H05B 3/14, H05B 3/34

(54) **ABSTANDSGEWIRK, INSBESONDERE FÜR EIN SITZPOLSTER**
SPACER FABRIC, IN PARTICULAR FOR A SEAT CUSHION
MAILLAGE DE SÉPARATION, EN PARTICULIER POUR UN COUSSIN D'ASSISE

(43) Veröffentlichungstag der Anmeldung: 06.10.2021
(73) Patentinhaber: Monosuisse AG, 6020 Emmenbrücke (CH)
(72) Erfinder: MEIER, Hanspeter, 9100 Herisau (CH)
(74) Vertreter: Wunderlich & Heim Patentanwälte Partnerschaftsgesellschaft mbB

(56) Entgegenhaltungen:
- EP-A1- 3 141 646
- EP-A2- 0 202 896
- EP-B1- 0 202 896
- DE-A1- 10 013 492
- DE-A1-102012 012 285
- DE-C2- 4 239 068
- DE-U1- 29 901 225

## Beschreibung

Die Erfindung betrifft ein Abstandsgewirk, insbesondere für ein Sitzpolster, mit einer oberen Gewirklage, einer unteren Gewirklage, welche im Wesentlichen parallel zu der oberen Gewirklage ist, einer Abstandslage, welche zwischen der oberen Gewirklage und der unteren Gewirklage angeordnet und durch Polfäden gebildet ist, welche sich im Wesentlichen senkrecht zu der oberen Gewirklage und der unteren Gewirklage erstrecken und diese verbinden, wobei die Polfäden zum Bilden eines Freiraums zueinander beabstandet sind, welcher durch Luft durchströmbar ist, und eine Heizeinrichtung an der oberen Gewirklage, gemäß dem Oberbegriff des Anspruchs 1.

Abstandsgewirke mit einer Abstandslage zum Bilden eines Freiraumes für eine Luftdurchströmung bei Fahrzeugsitzen sind seit langem bekannt, etwa aus der EP 0 868 323 B1 oder der DE 100 13 492 A1. Durch diesen Freiraum innerhalb des Abstandsgewirks wird eine Luftzirkulation ermöglicht, die für ein angenehmeres Sitzgefühl und zu einer verbesserten Feuchtigkeitsabfuhr führt.

Weiter ist es bekannt, zusätzlich an der Oberseite eines derartigen Abstandsgewirks eine Heizeinrichtung vorzusehen, so dass bei Bedarf auch eine Erwärmung einer Sitzfläche erfolgen kann. Derartige gattungsgemäße Abstandsgewirke gehen beispielsweise aus der DE 42 39 068 C2, der DE 299 01 225 U1 oder der EP 2 456 282 B1 hervor. Weiter ist aus der DE 10 2015 114 778 A1 ein Abstandsgewirk für ein beheizbares Verkleidungselement bekannt.

Die EP 0 202 896 A2 zeigt den Aufbau von Heizelementen, die für diverse Einsatzzwecke in unterschiedlicher Weise aufgebaut sein können.

Heizeinrichtungen für Sitzpolster weisen üblicherweise eine elektrische Heizleiterschleife auf, welche durch elektrischen Strom durchflossen wird, wobei aufgrund eines inneren Widerstandes der Heizleiter Wärme erzeugt wird.

Der Erfindung liegt die **Aufgabe** zugrunde, ein Abstandsgewirk anzugeben, welches bei einem einfachen Aufbau sowohl eine gute Durchlüftung als auch ein effizientes Beheizen ermöglicht.

Die Aufgabe wird nach der Erfindung durch ein Abstandsgewirk mit den Merkmalen des Anspruchs 1 gelöst. Bevorzugte Ausführungsformen der Erfindung sind in den abhängigen Ansprüchen angegeben.

Das erfindungsgemäße Abstandsgewirk ist dadurch gekennzeichnet, dass die Heizeinrichtung mit leitenden Fäden aus einem Polymermaterial gebildet ist, welches bei Umgebungstemperatur elektrisch leitfähig und bei einer vorgegebenen erhöhten Grenztemperatur stromsperrend ist. Die leitenden Fäden werden somit aus einem Polymermaterial gefertigt, welches bei einer Umgebungstemperatur eine elektrische Stromdurchleitung ermöglicht und dabei aufgrund eines inneren Widerstandes Wärme erzeugt. Bei Erreichen einer vorgegebenen erhöhten Grenztemperatur, welche typischerweise zwischen 40°C bis 70°C betragen kann, verändert sich ein innerer Widerstand des Polymermaterials derart, dass dieses vollständig oder zumindest im Wesentlichen stromsperrend ist. Hierdurch wird ein weiterer Stromdurchfluss und damit eine weitere Wärmedurchleitung unterbunden.

Bei einem Absinken der Temperatur des leitenden Polymermateriales unter die vorgegebene Grenztemperatur erhält das Material wieder seine elektrische Leitfähigkeit zurück, so dass eine weitere Stromdurchleitung und somit Aufheizung erfolgen kann.

Hierdurch wird eine materialabhängige Steuerung der Heizleistung erreicht. Darüber hinaus können Fäden aus einem flexiblen Polymermaterial wie andere Fäden zur Herstellung des Abstandsgewirks verarbeitet werden. Hierdurch ergibt sich eine besonders gute Verarbeitbarkeit und Herstellbarkeit des Abstandsgewirks insgesamt.

Besonders bevorzugt ist es nach einer Weiterbildung der Erfindung, dass die leitenden Fäden aus einem PTC-Material gebildet sind. Es handelt sich hierbei um sogenannten Kaltleitermaterialien, welche einen temperaturabhängigen Widerstand aufweisen und welche grundsätzlich zu der Gruppe der Thermistoren gehören. Derartige Materialien weisen einen positiven Temperaturkoeffizienten auf, bei welchen ein elektrischer Widerstand mit zunehmender Temperatur ansteigt. Das Material ist dabei so ausgewählt, dass dieses bis zu einer vorgesehenen Grenztemperatur von bis zu 70°C unter Abgabe von Wärme stromleitend ist und ab der Grenztemperatur eine signifikante Erhöhung des elektrischen Widerstandes aufweist, so dass ein entsprechender Leiter zumindest im Spannungsbereich für eine Sitzheizung stromsperrend ist.

Ein entsprechendes Verhalten kann durch eine Zugabe von Silizium, Barium oder anderen geeigneten Elementen bei einem Polymermaterial erzielt werden. Unter Abstandsgewirk im Sinne der Erfindung sind nicht nur Gewirke im eigentlichen Sinne sondern auch Gewebe, Gestricke und Vliese zu verstehen.

Das erfindungsgemäße Abstandsgewirk ist auch gekennzeichnet dadurch, dass die leitenden Fäden auf die obere Gewirklage aufgebracht sind. Die leitenden Fäden sind somit in eine Fadenstruktur der oberen Gewirklage eingearbeitet.

Die leitenden Fäden tragen so unmittelbar auch zum Aufbau und zur mechanischen Festigkeit der Gewirklage bei.

Das erfindungsgemäße Abstandsgewirk ist weiter gekennzeichnet dadurch, dass zumindest ein Teil der Polfäden durch die leitenden Fäden gebildet ist. Hierdurch kann zumindest in einem gewissen Umfang auch im Bereich der Abstands- oder Zwischenlage eine Heizwirkung erzielt werden. Dies ist für einen Abtransport von Feuchtigkeit vorteilhaft und kann insbesondere bei einem Durchtritt von Lüftungsluft durch die obere Gewirklage nach außen für einen zusätzlichen Wärmeeffekt durch Austreten warmer Luft dienen.

Grundsätzlich kann die Gewirklage ein Gestrick oder ein Vlies sein. Besonders vorteilhaft ist es nach einer Weiterbildung der Erfindung, dass zumindest die obere Gewirklage als eine Gewebelage ausgebildet ist und dass die leitenden Fäden als Schuss- und/oder Kettfäden zusammen mit nicht leitenden Grundfäden zu der oberen Gewirklage verwebt sind. Die leitenden Fäden sind somit unmittelbar Teil der Gewebestruktur der oberen Gewirklage. Dabei können die leitenden Fäden in Schuss- und in Kettrichtung verwebt sein, wobei diese so verwebt sind, dass sich diese an vorgegebenen Punkten kreuzen und dabei eine elektrische Verbindung bilden. Dabei kann eine schleifenartige Struktur gebildet werden, welche als eine Heizstruktur zum Hindurchleiten von elektrischem Strom dienen kann. Die leitenden Fäden können dabei hinsichtlich Durchmesser, Festigkeit und/oder Flexibilität wie die anderen nicht-leitenden Fäden ausgebildet sein, so dass sich eine sehr einheitliche Gewebestruktur ergibt.

Besonders zweckmäßig ist es dabei, dass die leitenden Fäden in der oberen Gewirklage so verwebt sind, dass diese in einem vorgesehenen Heizbereich mäanderförmig angeordnet sind, wobei eine Heizschleifenstruktur gebildet ist. Dabei sind in einer Geweberichtung eine Vielzahl von leitenden Fäden parallel zueinander in einem oberen Bereich der Gewirklage angeordnet, wobei diese parallelen leitenden Fäden dann wechselweise an Endbereichen mit relativ kürzeren leitenden Verbindungsfäden in Querrichtung gekreuzt, verbunden oder verknüpft sind, so dass sich eine mäanderartige Heizschleifenstruktur in der oberen Gewirklage ergibt.

Neben einer guten Heizwirkung kann zudem nach einer Weiterbildung der Erfindung eine gute Lüftungsfunktion dadurch erzielt werden, dass zumindest die obere Gewirklage einlagig mit einer offenen Porenstruktur gebildet ist. Die offenen Poren können dabei 10% bis 60% der Gewebefläche bilden. Hierdurch besteht ausreichend Möglichkeit, dass Luft aus der Abstandslage durch das Abstandsgewirk strömt und nach oben aus dem Abstandsgewirk austreten kann. Hierdurch kann eine besonders gute Kühlungsfunktion sowie ein Abtransport von Feuchtigkeit erzielt werden. Insbesondere bei Fahrzeugsitzen kann dies als besonders angenehm empfunden werden. Grundsätzlich können die Fäden in beliebiger Weise aufgebaut sein, insbesondere auch als Multifilfäden. Eine besonders gute Stromleitungsfunktion bei guter Festigkeit wird nach einer Weiterbildung der Erfindung dadurch erzielt, dass die leitenden Fäden als Monofilfäden ausgebildet sind. Die Fäden können dabei einen Fadendurchmesser von vorzugsweise zwischen 100 µm bis 2 mm aufweisen. Unter Monofilfäden sind drahtartige Fäden mit vorzugsweise einem runden Querschnitt zu verstehen. Darüber hinaus können Monofilfäden auch zum Bilden des weiteren Abstandsgewirks vorgesehen sein, insbesondere können die Polfäden, welche sich innerhalb des Abstandsgewirks erstrecken und eine notwendige mechanische Stabilität zum Bilden der räumlichen Struktur der Abstandslage aufweisen müssen, ebenfalls als Monofilfäden vorgesehen sein.

Eine besonders stabile Konstruktion des Abstandsgewirks wird nach einer Variante der Erfindung dadurch erzielt, dass dieses insgesamt als ein dreidimensionales Gewebe gebildet ist. Somit kann das Abstandsgewirk insgesamt auf einer Webmaschine als ein dreidimensionales Gewebe mit mehreren Gewebelagen hergestellt werden. Auf dieser Webmaschine werden dann ein Teil der Fäden als leitende Fäden in Schuss- und/oder Kettrichtung verwebt. Die weiteren nicht-leitenden Fäden können dabei sogenannte Strukturfäden sein, welche maßgeblich zur mechanischen Festigkeit und auch zum Bilden einer Gewebeoberfläche in einem gewissen Dekor beitragen oder diese maßgeblich bestimmen. Insbesondere an der Oberseite der oberen Gewirklage sind die leitenden Fäden so integriert, dass eine gute Abgabe der Heizleistung an der Oberseite gegeben ist. Die leitenden Fäden können an ihrer Außenseite mit einer isolierenden Umhüllung versehen sein, welche allenfalls im Bereich der Verbindungsabschnitte zum Bilden einer leitenden Verbindung entfernt ist.

Die Erfindung umfasst auch einen Sitz, insbesondere einen Fahrzeugsitz mit zumindest einem Sitzteil und einem Rückenteil, wobei die Erfindung dadurch gekennzeichnet ist, dass das Sitzteil und/oder das Rückenteil ein erfindungsgemäßes Abstandsgewirk aufweist, so wie dieses zuvor beschrieben ist. Bei einem derartigen Sitz können die zuvor beschriebenen Vorteile erzielt werden. Der Fahrzeugsitz ist insbesondere für ein Automobil vorgesehen.

Eine bevorzugte Weiterbildung des erfindungsgemäßen Sitzes besteht darin, dass zumindest eine Lüftereinrichtung vorgesehen ist, durch welche eine Luftströmung in der Abstandslage zum Abstandsgewirk erzeugbar ist. Die Lüftereinrichtung kann dabei einen oder mehrere elektrisch betriebene Lüfter aufweisen, welche eine Luftströmung in der Abstandslage erzeugen. Bei einer entsprechenden Porenstruktur der oberen Gewirklage kann vorzugsweise die Luft aus der Oberseite in Richtung auf eine auf dem Sitz sitzende Person ausströmen.

Besonders vorteilhaft ist es nach einer weiteren Ausführungsform der Erfindung, dass elektrische Anschlüsse an der unteren Gewirklage für die leitfähigen Fäden angeordnet sind, wobei sich zumindest zwei leitfähige Fäden als Polfäden von der oberen Gewirklage zur unteren Gewirklage erstrecken und mit den elektrischen Anschlüssen verbunden sind. Die elektrischen Anschlüsse sind dabei vorzugsweise mit Steckelementen ausgebildet, so dass diese mit entsprechenden Steckern einer Stromversorgung verbunden werden können. Insbesondere können die Anschlüsse für eine 12 V oder 24 V Stromversorgung vorgesehen sein.

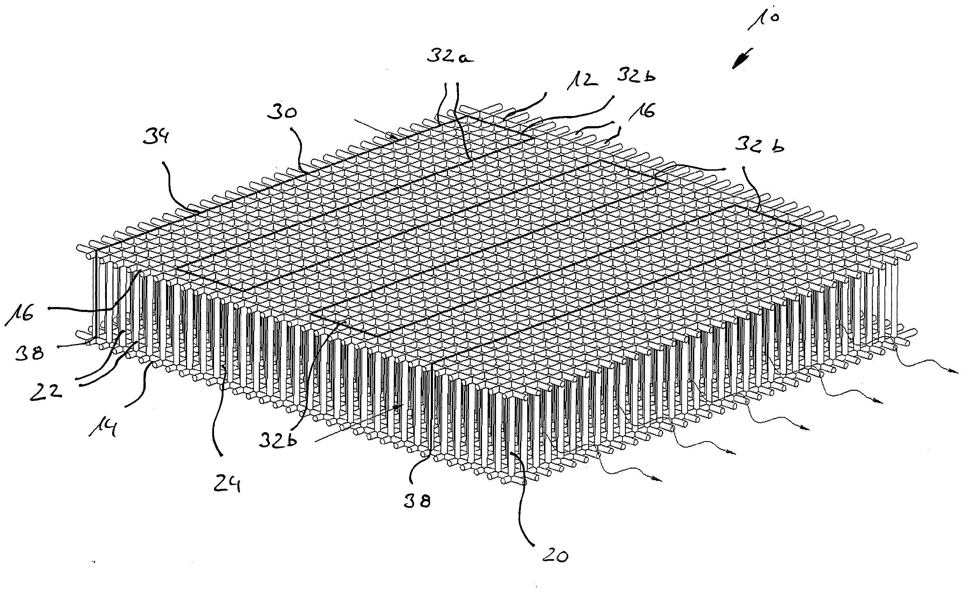

Die Erfindung wird nachfolgend anhand eines bevorzugten Ausführungsbeispiels weiter beschrieben, welches schematisch in der Zeichnung dargestellt ist.

In der einzigen Figurenzeichnung ist eine perspektivische Ansicht eines erfindungsgemäßen Abstandsgewirks 10 dargestellt. Das Abstandsgewirk 10 weist eine obere Gewirklage 12, eine untere Gewirklage 14 und eine dazwischen angeordnete Abstandslage 20 auf. Die obere Gewirklage 12 ist als ein Gewebe aus monofilen Grundfäden 16 ausgebildet, in welche leitende Fäden 32a in Kettrichtung und leitende Fäden 32b in einer Schussrichtung so eingewebt sind, so dass sie eine Heizschleifenstruktur 34 zum Bilden einer elektrischen Heizeinrichtung 30 ergeben. Schuss- und Kettrichtung können auch vertauscht sein. An den Kreuzungspunkten zwischen den leitenden Fäden 32a, 32b ist ein elektrischer Kontakt gebildet. Die leitenden Fäden 32a, 32b sind aus einem Polymermaterial gefertigt, welches bei Umgebungstemperatur elektrisch leitfähig und bei einer vorgegebenen erhöhten Grenztemperatur stromsperrend ist.

Die leitenden Fäden 32 sind dabei vorzugsweise hinsichtlich Durchmesser, Dehnungsverhalten, Festigkeit und/oder Flexibilität gleich oder weitgehend gleich zu den nicht leitenden Grundfäden 16 des als dreidimensionales Gewebe ausgebildeten Abstandsgewirks 10 ausgewählt.

Die untere Gewirklage 14 ist in dem dargestellten Ausführungsbeispiel ebenfalls als ein Gewebe aus nicht leitenden Grundfäden 16 gebildet. Die obere Gewirklage 12 und die untere Gewirklage 14 sind über im Wesentlichen senkrecht dazu verlaufende Polfäden 22 der Abstandslage 20 miteinander verbunden. Die Polfäden 22 können gleichzeitig als Grundfäden 16 in der oberen Gewirklage 12 und der unteren Gewirklage 14 dienen.

Die Polfäden 22 sind so voneinander beabstandet, dass in der Abstandslage 20 ein Freiraum 24 ausgebildet ist, welcher von Luft durchströmbar ist, was schematisch durch Pfeile angedeutet ist. Die Luftströmung kann frei oder durch eine Lüftereinrichtung erzwungen sein.

Die leitenden Fäden 32 zum Bilden der Heizeinrichtung 30 sind in das Gewebe der oberen Gewirklage 12 eingearbeitet. An zwei Kontaktabschnitten erstrecken sich freie Endabschnitte der leitenden Fäden 32 als Polfäden 22 nach unten zur unteren Gewirklage 14, um dort Anschlüsse 38 für eine elektrische Verbindung mit einer Stromquelle zu bilden. Bei einem Durchleiten von Strom ergibt sich aufgrund eines inneren Widerstandes der leitenden Fäden 32 der Heizeinrichtung 30 eine Wärmeentwicklung, welche zur Oberseite des Abstandsgewirks 10 abgegeben werden kann. Bevorzugt können sich auch weitere leitende Fäden 32 als Polfäden 22, welche Teil der Heizeinrichtung 30 sind, im Bereich des Abstandslage 20 erstrecken, so dass auch eine Erwärmung der Luftdurchströmung durch die Abstandslage 20 erfolgen kann. Hierdurch steigt die Aufnahmefähigkeit der erwärmten Luft für Feuchtigkeit. Die Luftdurchströmung kann auch nach oben durch Öffnungen in der gewebten oberen Gewirklage 12 erfolgen.

Bei Erreichen einer vorgegebenen höheren Grenztemperatur der leitenden Fäden 32 können diese aufgrund ihrer Kaltleitereigenschaft stromsperrend werden, so dass sich ohne eine aufwändige elektrische Steuerung eine materialinterne Temperaturregulierung ergibt.

## Patentansprüche

1. Abstandsgewirk, insbesondere für ein Sitzpolster, mit
- einer oberen Gewirklage (12),
- einer unteren Gewirklage (14), welche im Wesentlichen parallel zu der oberen Gewirklage (12) ist,
- einer Abstandslage (20), welche zwischen der oberen Gewirklage (12) und der unteren Gewirklage (14) angeordnet und durch Polfäden (22) gebildet ist, welche sich im Wesentlichen senkrecht zu der oberen Gewirklage (12) und der unteren Gewirklage (14) erstrecken und diese verbinden, wobei die Polfäden (22) zum Bilden eines Freiraums (24) zueinander beabstandet sind, welcher durch Luft durchströmbar ist, und
- einer Heizeinrichtung (30) an der oberen Gewirklage (12),
**dadurch gekennzeichnet,**
**dass** die Heizeinrichtung (30) mit leitenden Fäden (32) aus einem Polymermaterial gebildet ist, welches bei Umgebungstemperatur elektrisch leitfähig und bei einer vorgegebenen erhöhten Grenztemperatur stromsperrend ist,
**dass** die leitenden Fäden (32) in eine Fadenstruktur der oberen Gewirklage (12) eingearbeitet sind, und
**dass** zumindest ein Teil der Polfäden (22) durch die leitenden Fäden (32) gebildet ist.

2. Abstandsgewirk nach Anspruch 1,
**dadurch gekennzeichnet,**
**dass** die leitenden Fäden (32) aus einem PTC-Material gebildet sind.

3. Abstandsgewirk nach Anspruch 1 bis 2,
**dadurch gekennzeichnet,**
**dass** zumindest die obere Gewirklage (12) als eine Gewebelage ausgebildet ist und
**dass** die leitenden Fäden (32) als Schuss- und/oder Kettfäden zusammen mit nicht leitenden Grundfäden (16) zu der oberen Gewirklage (12) verwebt sind.

4. Abstandsgewirk nach Anspruch 3,
**dadurch gekennzeichnet,**
**dass** die leitenden Fäden (32) in der oberen Gewirklage (12) so verwebt sind, dass diese in einem vorgesehenen Heizbereich mäanderförmig angeordnet sind, wobei eine Heizschleifenstruktur (34) gebildet ist.

5. Abstandsgewirk nach Anspruch 3 oder 4,
**dadurch gekennzeichnet,**
**dass** zumindest die obere Gewirklage (12) einlagig mit einer offenen Porenstruktur gebildet ist.

6. Abstandsgewirk nach einem der Ansprüche 1 bis 5,
**dadurch gekennzeichnet,**
**dass** die leitenden Fäden (32) als Monofilfäden ausgebildet sind.

7. Abstandsgewirk nach einem der Ansprüche 1 bis 6,
**dadurch gekennzeichnet,**
**dass** dieses insgesamt als ein dreidimensionales Gewebe gebildet ist.

8. Sitz, insbesondere Fahrzeugsitz, mit zumindest einem Sitzteil und einem Rückenteil,
**dadurch gekennzeichnet,**
**dass** das Sitzteil und/oder das Rückenteil ein Abstandsgewirk (10) nach einem der Ansprüche 1 bis 7 aufweist.

9. Sitz nach Anspruch 8,
**dadurch gekennzeichnet,**
**dass** mindestens eine Lüftereinrichtung vorgesehen ist, durch welche eine Luftströmung in der Abstandslage (20) des Abstandsgewirks (10) erzeugbar ist.

10. Sitz nach Anspruch 8 oder 9,
**dadurch gekennzeichnet,**
**dass** elektrische Anschlüsse (38) an der unteren Gewirklage (14) für die leitenden Fäden (32) angeordnet sind, wobei sich zumindest zwei leitende Fäden (32) als Polfäden (22) von der oberen Gewirklage (12) zur unteren Gewirklage (14) erstrecken und mit den elektrischen Anschlüssen (38) verbunden sind.

## Claims

1. Spacer fabric, in particular for a seat cushion, having
- an upper fabric layer (12),
- a lower fabric layer (14) which is substantially parallel to the upper fabric layer (12),
- a spacer layer (20) which is arranged between the upper fabric layer (12) and the lower fabric layer (14) and formed by pile threads (22) that extend substantially perpendicularly to the upper fabric layer (12) and the lower fabric layer (14) and connect these, wherein the pile threads (22) are spaced apart from each other to form a free space (24), through which air can flow, and
- a heating means (30) on the upper fabric layer (12),
**characterized in that**
the heating means (30) is formed with conductive threads (32) made of a polymer material which is electrically conductive at ambient temperature and blocks current at a predetermined increased limit temperature,
**in that** the conductive threads (32) are incorporated in a thread structure of the upper fabric layer (12) and
**in that** at least a part of the pile threads (22) is formed by the conductive threads (32).

2. Spacer fabric according to claim 1,
**characterized in that**
the conductive threads (32) are formed of a PTC material.

3. Spacer fabric according to claim 1 to 2,
**characterized in that**
at least the upper fabric layer (12) is designed as a woven fabric layer and
**in that** the conductive threads (32) are woven as weft and/or warp threads together with non-conductive base threads (16) to form the upper fabric layer (12).

4. Spacer fabric according to claim 3,
**characterized in that**
the conductive threads (32) in the upper fabric layer (12) are woven such that they are arranged in a meandering manner in a provided heating region, wherein a heating loop structure (34) is formed.

5. Spacer fabric according to claim 3 or 4,
**characterized in that**
at least the upper fabric layer (12) is formed as a single layer with an open pore structure.

6. Spacer fabric according to any one of claims 1 to 5,
**characterized in that**
the conductive threads (32) are designed as monofilament threads.

7. Spacer fabric according to any one of claims 1 to 6,
**characterized in that**
this is formed entirely as a three-dimensional woven fabric.

8. Seat, in particular vehicle seat, having at least a seat part and a back part,
**characterized in that**
the seat part and/or the back part has a spacer fabric (10) according to any one of claims 1 to 7.

9. Seat according to claim 8,
**characterized in that**
at least one ventilation means is provided, through which an air flow can be generated in the spacer layer (20) of the spacer fabric (10).

10. Seat according to claim 8 or 9,
**characterized in that**
on the lower fabric layer (14) electrical connectors (38) for the conductive threads (32) are arranged, wherein at least two conductive threads (32) extend as pile threads (22) from the upper fabric layer (12) to the lower fabric layer (14) and are connected to the electrical connectors (38).

## Revendications

1. Maillage de séparation, en particulier pour un coussin d'assise, comportant :
- une couche de maillage supérieure (12),
- une couche de maillage inférieure (14) qui est sensiblement parallèle à la couche de maillage supérieure (12),
- une couche de séparation (20) qui est agencée entre la couche de maillage supérieure (12) et la couche de maillage inférieure (14) et est formée par des fils de poil (22) qui s'étendent sensiblement perpendiculairement à la couche de maillage supérieure (12) et à la couche de maillage inférieure (14) et relient celles-ci, dans lequel les fils de poil (22) sont espacés l'un de l'autre pour la formation d'un espace libre (24) qui peut être traversé par de l'air, et
- un dispositif de chauffage (30) au niveau de la couche de maillage supérieure (12), **caractérisé en ce que**
le dispositif de chauffage (30) est formé avec des fils conducteurs (32) en un matériau polymère qui est électroconducteur à température ambiante et est nonconducteur à une température limite élevée prédéfinie,
**en ce que** les fils conducteurs (32) sont insérés dans une structure de fil de la couche de maillage supérieure (12), et
**en ce qu'**au moins une partie des fils de poil (22) est formée par les fils conducteurs (32).

2. Maillage de séparation selon la revendication 1,
**caractérisé en ce que**
les fils conducteurs (32) sont formés en un matériau PTC.

3. Maillage de séparation selon la revendication 1 ou 2,
**caractérisé en ce que**
au moins la couche de maillage supérieure (12) est réalisée comme une couche de tissu, et
**en ce que** les fils conducteurs (32) sont tissés comme fils de trame et/ou de chaîne conjointement avec des fils de base non-conducteurs (16) en la couche de maillage supérieure (12).

4. Maillage de séparation selon la revendication 3,
**caractérisé en ce que**
les fils conducteurs (32) sont tissés dans la couche de maillage supérieure (12) de sorte que ceux-ci soient agencés en méandres dans une zone de chauffage prévue, une structure de boucle de chauffage (34) étant formée.

5. Maillage de séparation selon la revendication 3 ou 4,
**caractérisé en ce que**
au moins la couche de maillage supérieure (12) est formée en une seule couche avec une structure poreuse ouverte.

6. Maillage de séparation selon l'une des revendications 1 à 5,
**caractérisé en ce que**
les fils conducteurs (32) sont réalisés comme monofils.

7. Maillage de séparation selon l'une des revendications 1 à 6,
**caractérisé en ce que**
celui-ci est formé dans l'ensemble comme un tissu en trois dimensions.

8. Siège, en particulier siège de véhicule, comprenant au moins une partie de siège et une partie de dossier,
**caractérisé en ce que**
la partie de siège et/ou la partie de dossier présente un maillage de séparation (10) selon l'une des revendications 1 à 7.

9. Siège selon la revendication 8,
**caractérisé en ce que**
au moins un système de ventilation est prévu, par lequel un écoulement d'air dans la couche de séparation (20) du maillage de séparation (10) peut être produit.

10. Siège selon la revendication 8 ou 9,
**caractérisé en ce que**
des raccordements électriques (38) sont agencés au niveau de la couche de maillage inférieure (14) pour les fils conducteurs (32), au moins deux fils conducteurs (32) s'étendant comme fils de poil (22) de la couche de maillage supérieure (12) à la couche de maillage inférieure (14) et sont reliés aux raccordements électriques (38).
